# EUROPÄISCHE PATENTSCHRIFT

(11) **EP 0 750 835 B1**
(45) Veröffentlichungstag und Bekanntmachung des Hinweises auf die Patenterteilung: **04.10.2001**
(21) Anmeldenummer: 96105836.9
(22) Anmeldetag: 13.04.1996
(51) Int. Cl.: A01G 3/04, B27B 19/00, B23D 49/00

(54) **Heckenschere**
Hedge shear
Cisaille à haies

(30) Priorität: 28.06.1995 DE 19522971
(43) Veröffentlichungstag der Anmeldung: 02.01.1997
(73) Patentinhaber: ROBERT BOSCH GMBH, 70442 Stuttgart (DE)
(72) Erfinder: Heywood, Peter, Dipl.-Ing., 70794 Filderstadt (DE); Achtzehnter, Helmut, 70597 Stuttgart (DE); Brouwers, Theodor M.J., 5171 DE Kaatsheuvel (NL)

(56) Entgegenhaltungen:
- DD-A- 206 873
- DE-A- 3 638 376
- DE-A- 3 816 362
- DE-B- 2 201 976

## Beschreibung

### Stand der Technik

Die Erfindung geht aus von einer Heckenschere nach der Gattung des Anspruchs 1.

Durch die DE-OS 36 38 376 ist ein motorgetriebenes Werkzeug, d.h. eine Säge, mit zwei hin- und hergehenden Sägeblättern bekannt. Die Säge hat ein Kulissengetriebe, über das die Drehung der Motorwelle in eine hin- und hergehende Bewegung der Sägeblätter umgewandelt wird. Das Kulissengetriebe wird durch ein im Eingriff mit einem Motorwellenritzel stehendes, zentrales Stirnzahnrad gebildet, das drehfest auf einer in einem Getriebegehäuse gelagerten Welle angeordnet ist. Das Stirnzahnrad greift mittels über seine beiden Flachseiten hinausstehenden als Exzenterstiften ausgebildeten Kurbelzapfen in kulissenartige Ausnehmungen zweier gleitsteinartiger Messerhalterungen. Die zwei kreisenden Exzenterstifte nehmen die Messerhalterungen und damit die Sägeblätter geradlinig hin und her mit.

Das Kulissengetriebe der bekannten Maschine ist im Bereich der Exzenterstifte aufgrund der hohen Flächenpressung der kraftübertragenden Teile verhältnismäßig verschleißempfindlich. Außerdem wird das die Exzenterstifte tragende Stirnzahnrad, insbesondere die Lager der sie tragenden Welle durch die Kraftübertragung auf die Messerhalterungen stark, wechselnd beansprucht, weil sich ein hohes Kippmoment um die Mitte des Stirnzahnrads aufbaut.

Die Eingriffstelle zwischen Exzenterzapfen und Messerhalterung muß verhältnismäßig breit sein, damit sich infolge der Kippung des Zahnrades die Messerhalterung nicht vom Exzenterzapfen löst.

Durch die größeren Abmessungen werden die bewegten Teile schwerer. Dies begrenzt die Lebensdauer des Kulissengetriebes verhältnismäßig stark.

Außerdem ist das Getriebe der bekannten Maschine gegen mögliche Stoßbelastungen durch Blockieren der Sägeblätter nicht geschützt.

### Vorteile der Erfindung

Die erfindungsgemäße Heckenschere mit den kennzeichnenden Merkmalen des Anspruchs 1 hat demgegenüber den Vorteil hoher Lebensdauer des Kulissengetriebes, weil durch die Ausgestaltung der Kurbelzapfen als Kreisscheiben, die die zentrale Welle übergreifen und sich selbst auf dieser abstützen, kein Kippmoment mehr auf das Stirnzahnrad wirkt, wobei die Flächenpressung zwischen den Kurbelzapfen und den Kulissenaugen durch den gegenüber den Exezenterstiften deutlich größeren Durchmesser geringer ist. Dadurch wird die Heckenschere leichter und geräuscharmer, wobei der Wirkungsgrad höher ist. Die Handlichkeit ist wegen des geringen Gewichts und der geringeren Vibrationen besser. Außerdem sind die Herstellungskosten geringer.

Ein großer Vorteil für die Heckenschere ergibt sich dadurch, daß die Kurbelzapfen als Ausprägung der Zahnräder ausgestaltet sind. Gesonderte Teile sind für die Kurbelzapfen nicht erforderlich. Deren Herstellung und die Montage des Kulissengetriebes vereinfachen sich weiter. Die Heckenschere wird noch leichter und handlicher als die gemäß Anspruch 1.

Ein besonderer Vorteil ergibt sich aus der Konstruktion des Getriebes gemäß Anspruch 4 dadurch, daß eine Rutschkupplung in das Kulissengetriebe gemäß Anspruch 1 integriert ist. Dadurch wird ohne Erhöhung der Anzahl der Teile eine besonders sichere und darüber hinaus leichte und kompakte Heckenschere geschaffen.

Weitere, vorteilhafte Ausgestaltungen der Erfindung ergeben sich aus den abhängigen Ansprüchen.

### Zeichnung

Ausführungsbeispiele der Erfindung sind in der nachfolgenden Beschreibung anhand der zugehörigen Zeichnung näher erläutert.

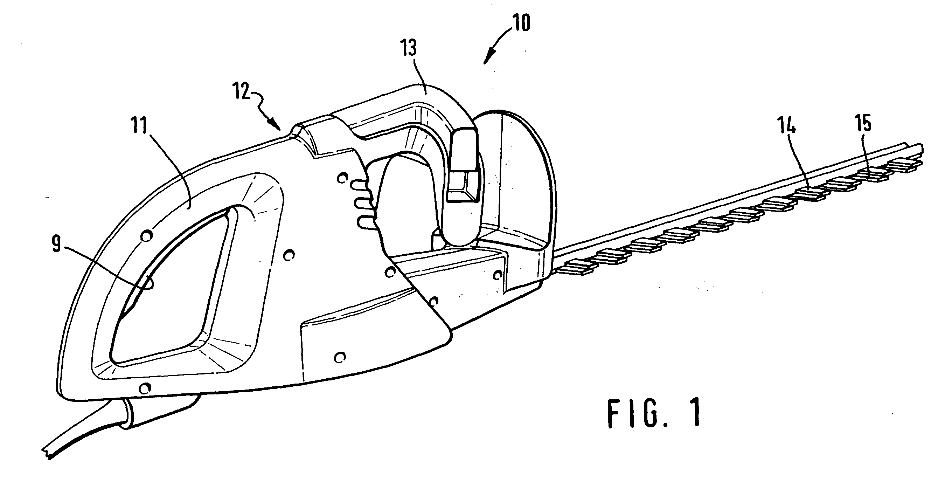

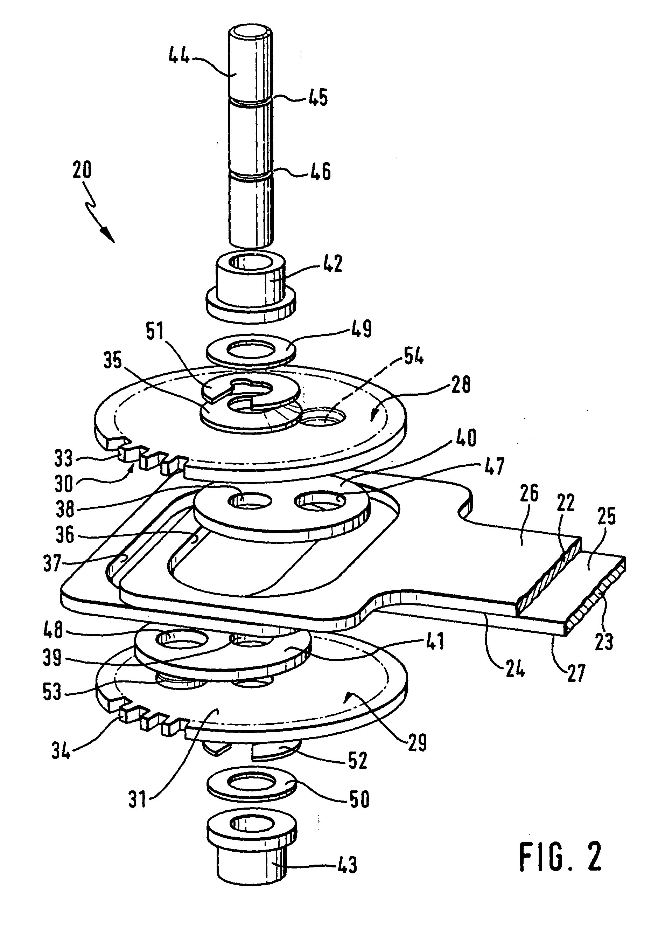

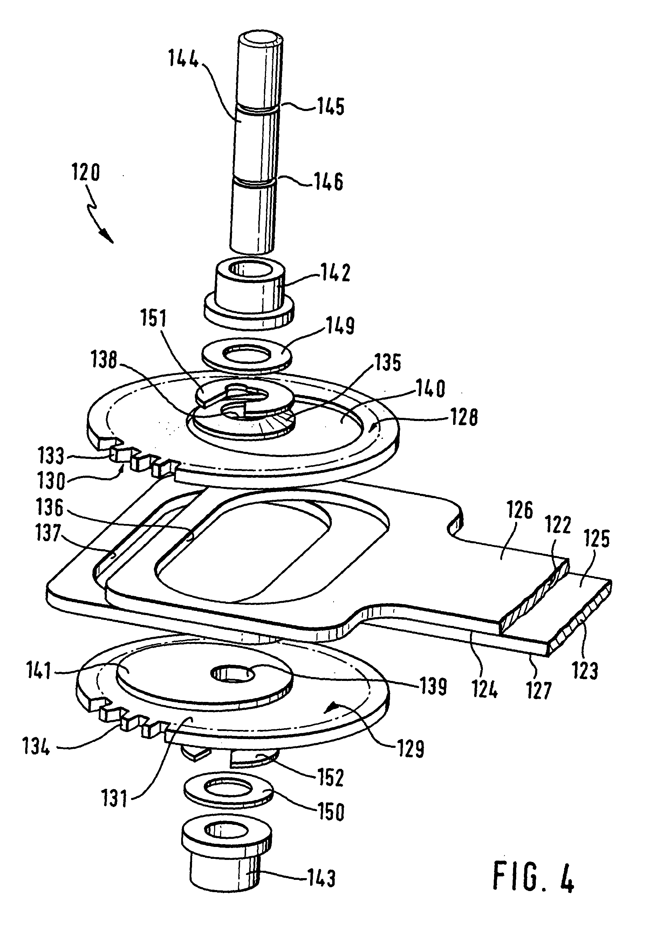

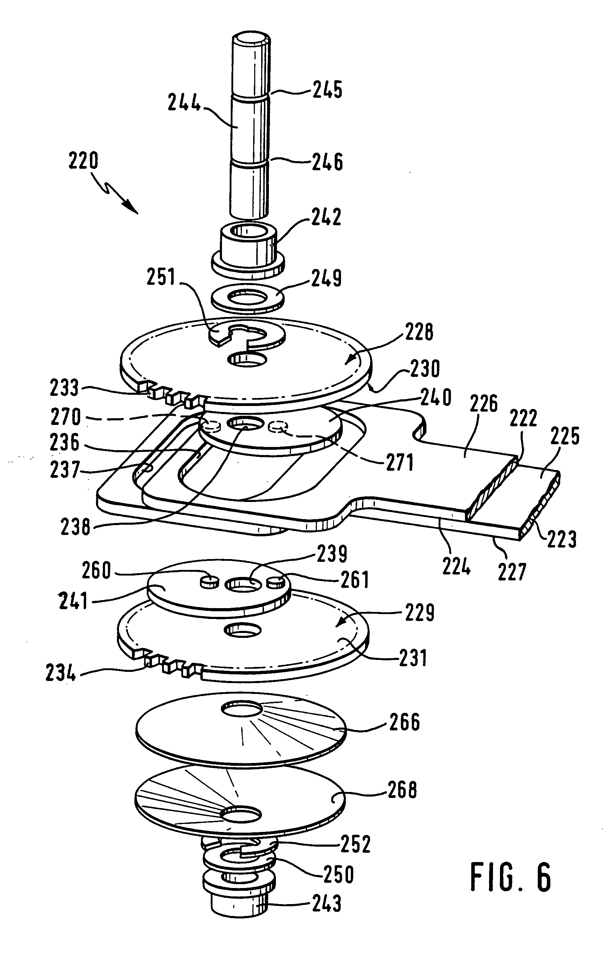

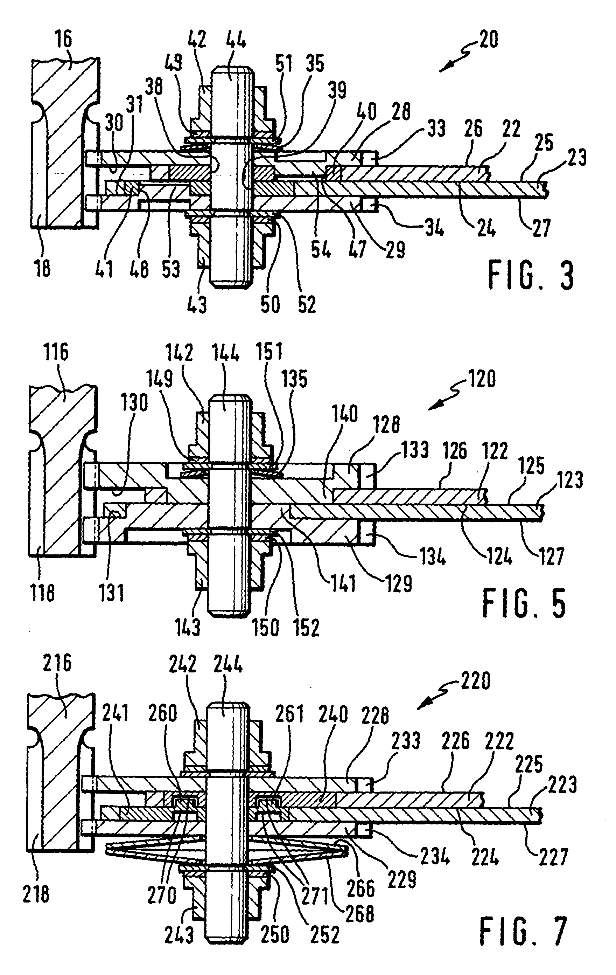

Es zeigen Figur 1 die Seitenansicht einer erfindungsgemäßen Heckenschere, Figur 2 die Explosionsdarstellung eines ersten Ausführungsbeispiels des Kulissengetriebes der erfindungsgemäßen Heckenschere, Figur 3 eine Seitenansicht des Kulissengetriebes gemäß Figur 2, Figur 4 die Explosionsdarstellung eines weiteren Ausführungsbeispiels des Kulissengetriebes, Figur 5 eine Seitenansicht des Kulissengetriebes gemäß Figur 4, Figur 6 die Explosionsdarstellung eines Ausführungsbeispiels des Kulissengetriebes mit integrierter Rutschkupplung und Figur 7 eine Seitenansicht des Kulissengetriebes gemäß Figur 6.

### Beschreibung des Ausführungsbeispiels

Die in Figur 1 dargestellte Heckenschere 10 besteht aus einem Gehäuse 12, das einen ersten Handgriff 11 mit einer Drucktaste 9 eines nichtdargestellten elektrischen Betriebsschalters sowie einen zweiten Handgriff 13 trägt und aus dem nach vorn in Längsrichtung ein Heckenscherenmesserpaar 14, 15 austritt. Dies wird über einen im Gehäuse 12 gelagerten, nicht dargestellten Motor hin- und hergehend angetrieben. Die Drehbewegung der Motorwelle 16 wird über ein Motorritzel 18 und über ein Kulissengetriebe 20 gemäß Figur 2, 4 oder 6 in die hin- und hergehende Bewegung der Heckenscherenmesser 14, 15 umgewandelt.

Aus der Explosionsdarstellung des Kulissengetriebes 20 gemäß Figur 2 wird deutlich, daß die gehäuseseitigen Enden der Heckenscherenmesser 14, 15 mit gleitsteinartigen Messerhalterungen 22, 23 verbunden sind. Die Messerhalterungen 22, 23 sind unmittelbar zueinander benachbart angeordnet. Sie gleiten beim Betrieb der Heckenschere 10 mit ihren inneren Flachseiten 24, 25 aufeinander abgestützt hin und her und stützen sich dabei mit ihren äußeren Flachseiten 26, 27 zwischen den Stirnseiten 30, 31 zweier Zahnräder 28, 29 mit Außenverzahnungen 33, 34 hin und hergehend ab. Die Messerhalterungen 22, 23 haben abgerundete, zentrale Ausnehmungen, die als Kulissenaugen 36, 37 zur Führung und zum Eingriff kreisscheibenartiger, exzentrischer Kurbelzapfen 40, 41 sowie zum Durchtritt einer zentralen Welle 44 dienen. Entlang den Rändern der Kulissenaugen 36, 37 gleiten die mit den Zahnrädern 28, 29 kreisenden Kurbelzapfen 40, 41 quer zur Bewegungsrichtung der Messerhalterungen 22, 23. Dadurch ergibt sich die Hin- und Herbewegung der Heckenscherenmesser 14, 15 wie bei einem Schubkurbelgetriebe. Dazu sind die Messerhalterungen 22, 23 in nichtdargestellten Längsführungen im Inneren des Gehäuses 12 gegen Querverschiebung gesichert geführt.

Jeder Kurbelzapfen 40, 41 trägt zwei gleiche erste und zweite exzentrische Bohrungen 38, 39. Durch die erste Bohrung 38 beider Kurbelzapfen 40, 41 tritt mit Spiel die zentrale, beidenends im Gehäuse 12 in je einer Lagerbuchse 42, 43 drehbar gelagerte Welle 44. Mit den zweiten exzentrischen Bohrungen 39 stehen die Kurbelzapfen 40, 41 um 180° gegeneinander verdreht im Eingriff mit je einem exzentrischen, stiftartigen Mitnehmer 52, 53 an den inneren Stirnseiten 30, 31 der Zahnräder 28, 29 gegen Verdrehen gesichert. Die Mitnehmer 52, 53 sind als Ausprägung der inneren Stirnseiten 30, 31 der Zahnräder 28, 29 ausgestaltet und damit deren einstückiger Bestandteil.

Die Außenverzahnungen 33, 34 der Zahnräder 28, 29 ragen über die Außenkontur der Messerhalterungen 22, 23 hinaus und stehen im Eingriff mit dem Motorritzel 18. Dadurch werden beide Zahnräder 28, 29 unabhängig voneinander durch das Motorritzel 18 mitgenommen.

Die zentrale Welle 44 ist beidenends im Getriebegehäuse 12 in den Lagerbuchsen 42, 43 drehbar gelagert und trägt zwei umlaufende Einstiche 45, 46 zum Einrasten der Seegerringe 51, 52. Diese dienen als Axialsicherung des Kulissengetriebes 20.

Die parallel zur Welle 44 im Gehäuse 12 drehbar gelagerte Motorwelle 16 greift mit dem Motorritzel 18 in die Verzahnungen 33, 34 der beiden axial um die Dicke der Kurbelzapfen 40, 41 beabstandeten Zahnräder 28, 29 ein. Bei Ingangsetzen des Motors durch Einschalten des Schalters mit der Drucktaste 9 dreht sich das Motorritzel 18 und nimmt dabei die Zahnräder 28, 29 mit. Die exzentrisch mit den Zahnrädern 28, 29 kreisenden Kurbelzapfen 40, 41 gleiten in den Kulissenaugen 36, 37 der Messerhalterungen 22, 23 quer zur Längachse der Heckenscherenmesser 14, 15 hin und her und bewegen die Heckenscherenmesser 14, 15 längs hin- und hergehend. Dadurch wird eine gegenläufige Bewegung der beiden Heckenscherenmesser 14 15 erzeugt, die Vibrationen der Heckenschere beim Betrieb vermindert.

Der Außendurchmesser der Kurbelzapfen 40, 41 ist größer als ihre Hublänge. Dadurch ist eine besonders gleichmäßige Lagerung durch beide Zahnräder gewährleistet.

Ein besonderer Vorteil ist, daß die Zahnräder 28, 29 aus gehärtetem Stahl bestehen und dadurch den Messerhaltern 22, 23 eine besonders stabile, verschleißfeste Gleitführung geben. Außerdem bestehen die Zahnräder 28, 29 aus so dünnem Stahlblech, daß sie durch Feinstanzen besonders preisgünstig herstellbar sind. Durch die Kopplung jeweils eines der beiden Zahnräder 28, 29 mit je einem Heckenscherenmesser 14, 15 ist eine besonders gleichmäßige Kraftverteilung auf das Motorritzel 18 möglich, wobei Spitzenbelastungen durch Stoß vermieden werden. Ein weiterer besonderer Vorteil ist, daß die beiden gegenläufigen Messer 14, 15 bzw. Messerhalterungen 22, 23 zwischen den beiden Zahnrädern 28, 29 axial aufeinander gleitend geführt werden und sich dadurch nicht quer vom Kurbelzapfen 40, 41 lösen können.

In Figur 3 ist das Kulissengetriebe 20 gemäß Figur 2 in seitlicher Schnittdarstellung gezeigt, wobei die Motorwelle 16 mit dem Motorritzel 18 im Eingriff mit den Außenverzahnungen 33, 34 der Zahnräder 28, 29 stehen. Die Messerhalterungen 22, 23 stützen sich aneinander mit ihren inneren Flachseiten 24, 25 ab und sind mit den äußeren Flachseiten 26, 27 zwischen den inneren Stirnseiten 30, 31 der Zahnräder 28, 29 geführt. Die inneren Stirnseiten 30, 31 tragen exzentrische, stiftartiger Mitnehmer 53, 54, die einstückig mit den Zahnrädern 28, 29 in Form von Ausprägungen verbunden sind. Sie dienen als Verdrehsicherung der Kurbelzapfen 40, 41, indem sie in die zweiten exzentrischen Bohrungen 47, 48 der Kurbelzapfen 40, 41 eingreifen. Die ersten exzentrischen Bohrungen 38, 39 der Kurbelzapfen 40, 41 umgreifen die zentrale Welle 44 und halten damit die Kurbelzapfen 40, 41 gegenüber dem Zahnrad 28, 29 verdrehsicher, jedoch mit diesen um die Welle 44 rotierend fest. Die Kurbelzapfen 40, 41 greifen in die Kulissenaugen 36, 37 ein und sind darin geführt.

Deutlich wird auch die Anordnung der Gleitlagerbuchsen 42, 43, der in die Einstiche 45, 46 greifenden Seegerringe 51, 52, der Distanzringe 49, 50 zur axialen Sicherung des Kulissengetriebes gegenüber der zentralen Welle 44.

In Figur 4 ist ein weiteres Ausführungsbeispiel eines Kulissengetriebes 120 einer Heckenschere 110 gemäß Figur 1 gezeigt, das sich vom Beispiel der Figur 2 nur insoweit unterscheidet, als die Kurbelzapfen 140, 141 vollständig mit den Zahnrädern 128, 129 verbunden sind und durch jeweils eine Ausprägung gebildet werden. Damit sind gesonderte Teile für die Kurbelzapfen 140, 141 nicht erforderlich und Herstellung und Montage des Kulissengetriebes 120 vereinfachen sich erheblich. Die Heckenschere 110 ist noch leichter als die gemäß Figur 2 ausgestaltete.

In Figur 5 ist das Kulissengetriebe 120 gemäß Figur 4 in seitlicher Schnittdarstellung gezeigt, wobei die Motorwelle 116 mit dem Motorritzel 118 im Eingriff mit den Außenverzahnungen 133, 134 der Zahnräder 128, 129 steht. Die Messerhalterungen 122, 123 stützen sich aneinander mit ihren inneren Flachseiten 124, 125 ab und sind mit den äußeren Flachseiten 126, 127 zwischen den inneren Stirnseiten 130, 131 der Zahnräder 128, 129 geführt. Die inneren Stirnseiten 130, 131 tragen die exzentrischen Kurbelzapfen 140, 141, die als Ausprägung einstückig mit den Zahnrädern 128, 129 verbunden sind. Die Kurbelzapfen 140, 141 greifen in die Kulissenaugen 136, 137 ein und sind darin geführt.

Deutlich wird auch die Anordnung der ersten und zweiten Gleitlagerbuchsen 142, 143, der in die Einstiche 145, 146 greifenden Seegerringe 151, 152, der Distanzringe 149, 150 zur axialen Sicherung der Kulissengetriebes 120 gegenüber der zentralen Welle 144.

In Figur 6 ist ein Ausführungsbeispiel eines Kulissengetriebes 220 einer Heckenschere 210 mit integrierter Rutschkupplung 254 gezeigt, das auf den Beispielen der Figuren 2 und 4 basiert. Im Unterschied zu den vorhergehenden Ausführungsbeispielen sind die Kurbelzapfen 240, 241 drehfest miteinander verbunden, wobei zwischen den äußeren Flachseiten der Kurbelzapfen 240, 241 und den inneren Stirnseiten 210, 231 der Zahnräder 228, 229 nur Kraftschluß besteht. Dieser wird mittels axial außen an eines der Zahnräder 228, 229 angrenzend auf der Welle 244 zentrierten Tellerfedern 266, 268 einstellbar hergestellt. Je nach eingestellter Vorspannung der Tellerfedern 266, 268 ist der Formschluß zwischen den Kurbelzapfen 240, 241 und den Zahnrädern 228, 229 und damit das Grenzmoment der Rutschkupplung größer oder kleiner.

Die Kurbelzapfen 240, 241 tragen auf der äußeren, den Zahnrädern 222, 229 zugewandten Stirnseite neben der exzentrischen Bohrung 238, 239 zum Durchtritt der Welle 244 zwei ausgeprägte Zapfen 247, 248, wobei auf der gegenüberliegenden Stirnseite jedes Kurbelzapfens 240, 241 eingeprägte Vertiefungen 270, 271 gebildet werden, deren Durchmesser etwas größer als der der Zapfen 241, 248 ist.

Die Zapfen 241, 248 des jeweils oberen Kurbelzapfens 240 müssen entweder bündig zu dessen Außenfläche abgeschnitten sein oder durch Auflegen einer entsprechend gebohrten, nichtdargestellten Zwischenscheibe ausgeglichen werden. Dadurch können beide Kurbelzapfen 240, 241 durch jeweils identische, ineinandergreifende, gestanzte Teile gebildet werden.

Selbstverständlich können anstelle der ausgeprägten Zapfen 241, 248 gesonderte Stifte, die in gesonderte Bohrungen greifen, für eine Zapfenverbindung der Kurbelzapfen 240, 231 verwendet werden, ohne daß die Haltekraft der Verbindung darunter leidet.

Blockiert eines der Heckenscherenmesser 14, 15 bzw. beide, wird der Antrieb nicht schlagartig gestoppt, sondern der Motor, die Motorwelle 216 mit Motorritzel 218 und den Zahnrädern 233, 234 können sich gegenüber den Kurbelzapfen 240, 241 und den Heckenscherenmessern 14, 15 weiterdrehen, bis die kinetische Energie der bewegten Teile verbraucht ist. Dabei gleiten die äußeren Flachseiten der Kurbelzapfen 240, 241 und die inneren Stirnseiten 210, 231 der Zahnräder 228, 229 aneinander entlang.

Die Stoßbelastung auf den Motor und den Antrieb und somit die Bruchgefahr für diese Teile sind dadurch im Fall des Blockierens deutlich verringert.

In Figur 7 ist das Kulissengetriebe 220 gemäß Figur 6 in seitlicher Schnittdarstellung gezeigt, wobei die Motorwelle 216 mit dem Motorritzel 218 im Eingriff mit den Außenverzahnungen 233, 234 der Zahnräder 228, 229 steht. Die Messerhalterungen 222, 223 stützen sich aneinander mit ihren inneren Flachseiten 224, 225 ab und sind mit den äußeren Flachseiten 226, 227 zwischen den inneren Stirnseiten 230, 231 der Zahnräder 228, 229 geführt. Die inneren Stirnseiten 230, 231 stützen sich auf den Außenseiten der exzentrischen Kurbelzapfen 240, 241, ab, die über die Zapfen 247, 248, Vertiefungen 270, 271 ineinandergreifen und nehmen sie über Kraftschluss mit. Die Kurbelzapfen 240, 241 greifen in die Kulissenaugen 236, 237 ein und sind darin geführt, so daß sie ihre kreisende Bewegung in die Hin- und Herbewegung der Messerhalterungen 222, 223 umwandeln können.

Deutlich wird auch die Anordnung der ersten und zweiten Gleitlagerbuchsen 242, 243, der in die Einstiche 245, 246 greifenden Seegerringe 251, 252, der Distanzringe 249, 250 zur axialen Sicherung der Kulissengetriebes 220 gegenüber der zentralen Welle 244 und der Tellerfedern 266, 268.

Bei einem nichtdargestellten Ausführungsbeispiel der Erfindung trägt jeder der beiden Kurbelzapfen symmetrisch zur Durchtrittsöffnung der zentralen Welle eine Vertiefung bzw. Bohrung und einen Zapfen, dessen Außendurchmesser zum Eingriff in die Vertiefung bzw. Bohrung bestimmt ist. Werden die beiden identischen Kurbelzapfen mit ihren die Zapfen tragenden Seiten aufeinander gelegt und so gegeneinander verdreht, daß die Zapfen in die Vertiefungen greifen, ist dadurch die drehfeste Verbindung zwischen den Kurbelzapfen realisiert. Damit ist die Rutschkupplung durch die geringe Teile-Zahl besonders günstig herstellbar.

Bei einem weiteren, nichtdargestellten Ausführungsbeispiel der Erfindung tragen die Kurbelzapfen zwei zur Durchtrittsöffnung der Welle symmetrische Bohrungen zum Durchtritt gesonderter Bolzen, die die drehfeste Verbindung zwischen den Kurbelzapfen sichern. Damit ist die Rutschkupplung durch identische Kurbelzapfen und die Verwendung von Normteilen für die Bolzen ebenfalls besonders günstig herstellbar.

## Patentansprüche

1. Motorgetriebene Heckenschere (10) mit einem Gehäuse (12) worin ein Motor aufgenommen ist, wobei sich aus dem Gehäuse (12) nach vorn in Längsrichtung ein Heckenscherenmesserpaar (14, 15) erstreckt, wobei ein Kulissengetriebe (20; 120; 220) zwischen den Heckenscherenmessern (14, 15) und dem Motor die Drehung der Motorwelle (16) in eine hin- und hergehende, insbesondere gegenläufige, Bewegung der Heckenscherenmesser (14, 15) umwandelt und wobei die Heckenscherenmesser (14, 15) von Messerhalterungen (22, 23, 122, 123, 222, 223) getragen werden, in deren Kulissenaugen (36; 37, 136; 1137, 236; 237) Kurbelzapfen (40, 41, 140, 141, 240, 241) mindestens eines Zahnrades (28; 29, 128; 129, 228; 229) des Kulissengetriebes (20; 120; 220) eingreifen, wobei das Zahnrad (28; 29, 128; 129, 228; 229) drehfest auf einer zentralen Welle (33) sitzt, deren Enden im Gehäuse (12) drehbar gelagert sind, **dadurch gekennzeichnet,**
**daß** zwei drehfest, axial beabstandete Zahnräder (28; 29, 128; 129, 228; 22934, 36) des Kulissengetriebes (23; 123, 223) auf der Welle (44, 144, 244) nebeneinander angeordnet sind, die auf den einander zugewandten Seiten je einen Kurbelzapfen (40, 41, 140, 141, 240, 241) in Gestalt einer exzentrisch angeordneten Kreisscheibe tragen und zwischeneinander die die Kurbelzapfen (40, 41, 140, 141, 240, 241) mit den Kulissenaugen (36, 37, 136, 137, 236, 237) ringartig umgreifenden Messerhalterungen (22, 23) gleitend führen, wobei jeder Kurbelzapfen (40, 41, 140, 141, 240, 241) die Welle (44, 144, 244) mit einer ersten Bohrung (38, 39, 138, 139, 238, 239) umgreift und über eine Verbindung mit dem benachbarten Zahnrad (28; 29, 128; 129, 228; 229) von diesem drehend mitgenommen wird.

2. Heckenschere nach Anspruch 1, **dadurch gekennzeichnet, daß** die Kurbelzapfen (40, 41, 140, 141, 240, 241) mit einer weiteren exzentrischen Bohrung (47, 48, 147, 148, 247, 248) und mit darin eingreifendem Mitnehmer (53, 54) der Zahnräder (28; 29, 128; 129, 228; 229) mit diesen formschlüssig gekuppelt sind.

3. Heckenschere nach Anspruch 1, **dadurch gekennzeichnet, daß** die Kurbelzapfen (140; 141) aus den Zahnrädern (128; 129) herausgeprägt sind.

4. Heckenschere nach Anspruch 1, **dadurch gekennzeichnet, daß** zumindest einer der Kurbelzapfen (240; 241) mit dem Zahnrad (228; 229) kraftschlüssig durch eine bestimmten Axialkraft beaufschlagt verbunden ist, so **daß** bei Erreichen eines bestimmten Drehmoments zwischen dem Motor und den Heckenscherenmessern (14, 15) der Kurbelzapfen (240; 241) gegenüber dem Zahnrad (228; 229) verdrehbar ist und damit eine Rutschkupplung zwischen Motor und Heckenscherenmessern (14; 15) gebildet wird.

5. Heckenschere nach Anspruch 4, **dadurch gekennzeichnet, daß** die zwei Kurbelzapfen (240, 241) und zwei Zahnräder (228; 229) sich jeweils mit bestimmten Flächen mit einer definierten Rauhigkeit aufeinander abstützen.

6. Heckenschere nach Anspruch 4 oder 5, **dadurch gekennzeichnet, daß** die Kurbelzapfen (240, 241) und die Zahnräder (228; 229) durch Federmittel, insbesondere Tellerfedern (266, 268) mit einer bestimmten Federkraft axial aneinander gedrückt werden.

7. Heckenschere nach einem der vorhergehenden Ansprüche, **dadurch gekennzeichnet, daß** beide Kurbelzapfen (240, 241) miteinander drehfest verbunden sind.

8. Heckenschere nach Anspruch 7, **dadurch gekennzeichnet, daß** beide Kurbelzapfen (240, 241) gemeinsam aus einem einzigen Teil gebildet werden.

9. Heckenschere nach Anspruch 8, **dadurch gekennzeichnet, daß** beide Kurbelzapfen (240, 241) aus einem Stück Blech gebildet werden, das durch Falzen und/oder Prägen umgeformt worden ist.

10. Heckenschere nach Anspruch 1, **dadurch gekennzeichnet, daß** die Kurbelzapfen (240, 241) auf ihren dem Zahnrad (228; 229) abgewandten Seiten durch Vertiefungen (270, 271) und darin eingreifende Zapfen (260, 261) miteinander drehfest und mit dem Zahnrad (228, 229) jeweils kraftschlüssig verbunden sind.

## Claims

1. Motor-driven hedge trimmers (10) with a housing (12), in which a motor is accommodated, a pair (14, 15) of hedge trimmer blades extending forwards in the longitudinal direction out of the housing (12), a Scotch yoke mechanism (20; 120; 220) between the hedge trimmer blades (14, 15) and the motor converting the rotation of the motor shaft (16) into a reciprocating, in particular opposed, motion of the hedge trimmer blades (14, 15), and the hedge trimmer blades (14, 15) being carried by blade holders (22, 23, 122, 123, 222, 223), in the slotted eyes (36; 37, 136; 137, 236; 237) of which crankpins (40, 41, 140, 141, 240, 241) of at least one gearwheel (28; 29, 128; 129, 228; 229) of the Scotch yoke mechanism (20; 120; 220) engage, the gearwheel (28; 29, 128; 129, 228; 229) being seated in a rotationally fixed manner on a central shaft (44), the ends of which are rotatably mounted in the housing (12), **characterized in that** two gearwheels (28; 29, 128; 129, 228; 22934, 36) of the Scotch yoke mechanism (23; 123, 223) are arranged adjacent to one another in a rotationally fixed manner and at an axial spacing on the shaft (44, 144, 244), the gearwheels each bearing a crankpin (40, 41, 140, 141, 240, 241) in the form of an eccentrically arranged circular disk on their mutually facing sides and between them providing sliding guidance for the blade holders (22, 23) annularly surrounding the crankpins (40, 41, 140, 141, 240, 241) with the slotted eyes (36, 37, 136, 137, 236, 237), each crankpin (40, 41, 140, 141, 240, 241) engaging around the shaft (44, 144, 244) with a first hole (38, 39, 138, 139, 238, 239) and being taken along in rotation by the adjacent gearwheel (28; 29, 128; 129, 228; 229) by means of a connection to the latter.

2. Hedge trimmers according to Claim 1, **characterized in that** the crankpins (40, 41, 140, 141, 240, 241) are coupled in a form-locking manner to the gearwheels (28; 29, 128; 129, 228; 229) by means of a further eccentric hole (47, 48, 147, 148, 247, 248) and by means of driver elements (53, 54) of the said gearwheels engaging in the said hole.

3. Hedge trimmers according to Claim 1, **characterized in that** the crankpins (140; 141) are formed from the gearwheels (128; 129) by embossing.

4. Hedge trimmers according to Claim 1, **characterized in that** at least one of the crankpins (240; 241) is connected in a force-locking manner to the gearwheel (228; 229) under the action of a particular axial force, allowing the crankpin (240; 241) to rotate relative to the gearwheel (228; 229) when a particular torque between the motor and the hedge trimmer blades (14, 15) is reached and hence forming a slipping clutch between the motor and the hedge trimmer blades (14; 15).

5. Hedge trimmers according to Claim 4, **characterized in that** the two crankpins (240, 241) and two gearwheels (228; 229) are supported on one another by particular surface areas with a defined roughness.

6. Hedge trimmers according to Claim 4 or 5, **characterized in that** the crankpins (240, 241) and the gearwheels (228; 229) are pressed axially against one another with a particular spring force by spring means, in particular Belleville springs (266, 268).

7. Hedge trimmers according to one of the preceding claims, **characterized in that** both crankpins (240, 241) are connected in a rotationally fixed manner to one another.

8. Hedge trimmers according to Claim 7, **characterized in that** both crankpins (240, 241) are formed jointly from a single piece.

9. Hedge trimmers according to Claim 8, **characterized in that** both crankpins (240, 241) are formed from a piece of sheet metal that is formed by folding and/or embossing.

10. Hedge trimmers according to Claim 1, **characterized in that** the crankpins (240, 241) are connected to one another in a rotationally fixed manner on their side facing away from the gearwheel (228; 229) by depressions (270, 271) and pins (260, 261) engaging therein and are each connected in a force-locking manner to the gearwheel (228; 229).

## Revendications

1. Cisaille à haies motorisée (10), dans laquelle,
- un moteur est logé dans un boîtier (12) d'où part, vers l'avant en direction longitudinale, une paire de lames (14, 15) de la cisaille,
- entre le moteur et les lames (14, 15) se trouve une transmission à coulisse (20, 120, 220) qui transforme la rotation de l'arbre (16) du moteur en un mouvement de va et vient, selon des sens opposés, des lames (14, 15),
- les lames (14, 15) sont portées par des supports (22, 23, 122, 123, 222, 223) présentant des ouvertures de coulisse (36, 37, 136, 137, 236, 237) dans lesquelles sont engagés des tourillons de manivelle (40, 41, 140, 141, 240, 241) d'au moins un pignon (28, 29, 128, 129, 228, 229) de la transmission à coulisse (20, 120, 220),
- le pignon (28, 29, 128, 129, 228, 229) est monté avec solidarité en rotation, sur un arbre central (33) dont les extrémités tournent dans des paliers portés par le boîtier (12),
**caractérisée en ce que**
- deux pignons, solidaires en rotation et espacés axialement (28, 29, 128, 129, 228, 229, 34, 36) de la transmission à coulisse (20, 120, 220) sont montés l'un à côté de l'autre sur l'arbre (44, 144, 244) et sur leurs faces en regard portent chacun un tourillon de manivelle (40, 41, 140, 141, 240, 241) constitué par un disque circulaire monté excentré,
- entre eux, les pignons, font glisser en les guidant les supports de lame (22, 23) qui entourent annulairement par leurs ouvertures de coulisse (36, 37, 136, 137, 236, 237) les tourillons (40, 41, 140, 141, 240, 241),
- chacun de ces tourillons (40, 41, 140, 141, 240, 241) entourant l'arbre (44, 144, 244) par un premier perçage (38, 39, 138, 139, 238, 239) et étant relié au pignon voisin (28, 29, 128, 129, 228, 229) qui l'entraîne en rotation.

2. Cisaille selon la revendication 1,
**caractérisée en ce que**
les tourillons (40, 41, 140, 141, 240, 241), par un autre perçage excentré (47, 48, 147, 148, 247, 248) et un entraînement (53, 54) engagé dans ce perçage et porté par les pignons (28, 29, 128, 129, 228, 229) sont accouplés à ceux-ci par combinaison de formes.

3. Cisaille selon la revendication 1,
**caractérisée en ce que**
les tourillons (140, 141) sont réalisés par repoussage dans les pignons (128, 129).

4. Cisaille selon la revendication 1,
**caractérisée en ce qu'**
au moins un des tourillons (240, 241), sous l'action d'une force axiale définie, est relié par adhérence au pignon (228, 229), de sorte que le tourillon (240, 241) peut tourner par rapport au pignon (228, 229) quand est dépassé un couple défini entre le moteur et les lames (14, 15), un accouplement de patinage étant ainsi établi entre le moteur et les lames (14, 15).

5. Cisaille selon la revendication 4,
**caractérisée en ce que**
les deux tourillons (240, 241) sont appliqués sur les pignons (228, 229) respectivement, par des portées définies présentant une rugosité définie.

6. Cisaille selon l'une quelconque des revendications 4 ou 5,
**caractérisée en ce que**
les tourillons (240, 241) et les pignons (228, 229) sont appliqués axialement les uns sur les autres, par des moyens élastiques, en particulier par des rondelles Belleville (266, 268), exerçant une force élastique définie.

7. Cisaille selon l'une quelconque des revendications précédentes,
**caractérisée en ce que**
les deux tourillons (240, 241) sont solidarisés en rotation.

8. Cisaille selon la revendication 7,
**caractérisée en ce que**
les deux tourillons (240, 241) sont formés en commun sur une seule pièce.

9. Cisaille selon la revendication 8,
**caractérisée en ce que**
les deux tourillons (240, 241) sont obtenus à partir d'une pièce de tôle en la formant par pliage et/ou estampage.

10. Cisaille selon la revendication 1,
**caractérisée en ce que**
les tourillons (240, 241) sont, sur leurs faces non tournées vers le pignon correspondant (228, 229), solidarisés en rotation par des creux (270, 271) et des tétons (260, 261) engagés dans ceux-ci, chaque tourillon étant relié par adhérence au pignon (228, 229).
